(19) Europäisches Patentamt
European Patent Office
Office européen des brevets

(11) **EP 4 615 086 A1**

(12) **EUROPEAN PATENT APPLICATION**
published in accordance with Art. 153(4) EPC

(43) Date of publication:
**10.09.2025  Bulletin 2025/37**

(21) Application number: **22964052.9**

(22) Date of filing: **04.11.2022**

(51) International Patent Classification (IPC):
**H04W 72/04** (2023.01)

(52) Cooperative Patent Classification (CPC):
**H04W 72/02; H04L 1/18; H04L 1/1893;
H04W 72/40**

(86) International application number:
**PCT/CN2022/129982**

(87) International publication number:
**WO 2024/092745 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHANG, Shichang
Dongguan, Guangdong 523860 (CN)**

(74) Representative: **Grassi, Stefano
Bugnion S.p.A.
Viale Lancetti, 17
20158 Milano (IT)**

(54) **RESOURCE SELECTION METHOD AND APPARATUS, AND TERMINAL**

(57)    Embodiments of the present application provide a resource selection method and apparatus, and a terminal. The method comprises: a terminal selects a plurality of SL grants, wherein different SL grants in the plurality of SL grants are used for transmission of different TBs; the plurality of SL grants have at least one of the following features: resources of the plurality of SL grants correspond to a plurality of groups of consecutive slot resources, and different resources in the same group of consecutive slot resources belong to different SL grants; and the interval between any two resources in the same SL grant is greater than or equal to a first duration.

> A terminal selects multiple SL grants, herein, different SL grants among the multiple SL grants are used for transmission of different TBs, and the multiple SL grants have at least one of following characteristics: resources of the multiple SL grants correspond to multiple groups of consecutive slot resources, and different resources in the same group of consecutive slot resources belong to different SL grants; or, an interval between any two of resources in the same SL grant is greater than or equal to a first duration

601

**FIG. 6**

EP 4 615 086 A1

**Description**

TECHNICAL FIELD

Embodiments of the disclosure relate to the field of mobile communication technologies, and particularly to a resource selection method and apparatus, and a terminal.

BACKGROUND

In order to make full use of channel occupancy time (COT) initiated after successful listen before talk (LBT), the concept of multiple consecutive slots transmission (MCSt) is introduced into a sidelink-unlicense (SL-U) system. That is, a communication device continuously performs transmissions on multiple slots, to improve the utilization of the COT.
If the MCSt transmission mode is adopted in the SL-U system, multiple consecutive slots can be used to transmit the same transport block (TB) or different TBs. It is required to clarify how to select transmission resources for the TB(s).

SUMMARY

Embodiments of the disclosure provide a resource selection method and apparatus, a terminal, a chip, a computer-readable storage medium, a computer program product, and a computer program.
A resource selection method provided in an embodiment of the disclosure includes the following operation.
The terminal selects multiple sidelink (SL) grants. Herein, different SL grants among the multiple SL grants are used for transmission of different TBs. Herein, the multiple SL grants have at least one of following characteristics: resources of the multiple SL grants correspond to multiple groups of consecutive slot resources, and different resources in the same group of consecutive slot resources belong to the different SL grants; or, an interval between any two of resources in the same SL grant is greater than or equal to a first duration.
A resource selection method provided in an embodiment of the disclosure includes the following operation.
The terminal selects one SL grant. Herein, the SL grant is used for transmission of one TB, the SL grant corresponds to a group of consecutive slot resources, and multiple resources in the consecutive slot resources belong to the SL grant.
A resource selection apparatus provided in an embodiment of the disclosure includes a selection unit.
The selection unit is configured to select multiple SL grants. Herein, different SL grants among the multiple SL grants are used for transmission of different TBs. Herein, the multiple SL grants have at least one of following characteristics: resources of the multiple SL grants correspond to multiple groups of consecutive slot resources, and different resources in the same group of consecutive slot resources belong to the different SL grants; or, an interval between any two of resources in the same SL grant is greater than or equal to a first duration.
A resource selection apparatus provided in an embodiment of the disclosure includes a selection unit.
The selection unit is configured to select one SL grant. Herein, the SL grant is used for transmission of one TB, the SL grant corresponds to a group of consecutive slot resources, and multiple resources in the consecutive slot resources belong to the SL grant.
A terminal provided in an embodiment of the disclosure includes a processor and a memory. The memory is configured to store a computer program. The processor is configured to call the computer program stored in the memory and run the computer program to perform the above resource selection method.
A chip provided in an embodiment of the disclosure is configured to implement the above resource selection method.
Specifically, the chip includes a processor configured to call a computer program from a memory and run the computer program to cause a device on which the chip is installed to perform the above resource selection method.
A computer-readable storage medium provided in an embodiment of the disclosure is configured to store a computer program that causes a computer to perform the above resource selection method.
A computer program product provided in an embodiment of the disclosure includes computer program instructions that cause a computer to perform the above resource selection method.
A computer program provided in an embodiment of the disclosure causes a computer to perform the above resource selection method when being run on the computer.
Through the above technical solutions, it is clarified how to select SL grant(s) (i.e., transmission resources) for the TB(s), so that the terminal can apply consecutive slot resources to transmission of different TBs, or the terminal can also apply consecutive slot resources to transmission of the same TB, thereby ensuring that the terminal occupies consecutive resources in time as much as possible, which is beneficial for improving the overall performance of the SL-U system. In addition, the hybrid automatic repeat request acknowledgement (HARQ-ACK) feedback can also be ensured as much as possible by limiting the interval between resources.

BRIEF DESCRIPTION OF THE DRAWINGS

The accompanying drawings, which are illustrated herein, provide a further understanding of the disclosure and constitute a part of the disclosure. The exemplary embodiments of the disclosure and their description are used to explain the disclosure and not to unduly limit the disclosure. In the drawings:

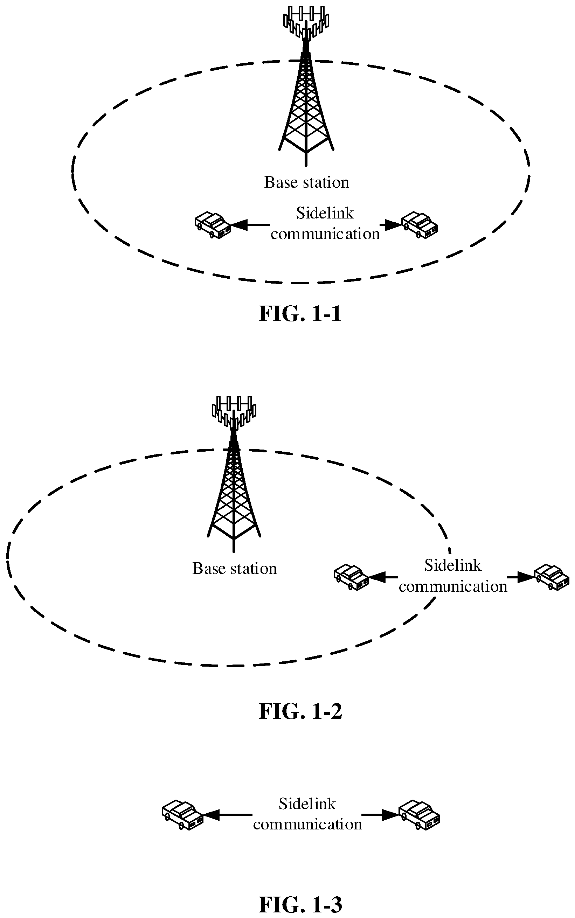

FIG. 1-1 is a diagram of a sidelink communication within a network coverage provided in an embodiment of the disclosure.
FIG. 1-2 is a diagram of a sidelink communication partly within a network coverage provided in an embodiment of the disclosure.
FIG. 1-3 is a diagram of a sidelink communication outside a network coverage provided in an embodiment of the disclosure.
FIG. 2 is a diagram of a resource selection corresponding to a second mode provided in an embodiment of the disclosure.
FIG. 3-1 is a diagram of a unicast transmission method provided in an embodiment of the disclosure.
FIG. 3-2 is a diagram of a multicast transmission method provided in an embodiment of the disclosure.
FIG. 3-3 is a diagram of a broadcast transmission method provided in an embodiment of the disclosure.
FIG. 4 is a diagram of a frame structure for physical downlink control channel (PDCCH) and physical sidelink shared channel (PSSCH) provided in an embodiment of the disclosure.
FIG. 5 is a diagram of a mapping relationship between PSSCH transmission resources and physical sidelink feedback channel (PSFCH) transmission resources provided in an embodiment of the disclosure.
FIG. 6 is a first flowchart of a resource selection method provided in an embodiment of the disclosure.
FIG. 7 is a second flowchart of a resource selection method provided in an embodiment of the disclosure.
FIG. 8 is a first diagram of an example of a resource selection provided in an embodiment of the disclosure.
FIG. 9 is a second diagram of an example of a resource selection provided in an embodiment of the disclosure.
FIG. 10 is a first structural diagram of a resource selection apparatus provided in an embodiment of the disclosure.
FIG. 11 is a second structural diagram of a resource selection apparatus provided in an embodiment of the disclosure.
FIG. 12 is a structural diagram of a communication device provided in an embodiment of the disclosure.
FIG. 13 is a structural diagram of a chip according to an embodiment of the disclosure.

DETAILED DESCRIPTION

The technical solutions in the embodiments of the disclosure would be described below in conjunction with the accompanying drawings in the embodiments of the disclosure. It is apparent that the described embodiments are a part of the embodiments of the disclosure, rather than all of the embodiments. Based on the embodiments of the disclosure, all other embodiments obtained by those of ordinary skill in the art without creative effort fall within the scope of protection of the disclosure.

The technical solutions of the embodiments of the disclosure can be applied to various sidelink communication systems. For convenience of understanding of the technical solutions of the embodiments of the disclosure, related technologies about the sidelink communication system are described. The following related technologies may be used as alternative solutions and may be combined with the technical solutions of the embodiments of the disclosure in various ways, all of which belong to the scope of protection of the embodiments of the disclosure.

**Sidelink communication in different network coverage conditions**

In a sidelink communication, according to the network coverage conditions of the terminals performing communication, it can be divided into a sidelink communication within a network coverage, a sidelink communication partly within a network coverage, and a sidelink communication outside a network coverage, as illustrated in FIG. 1-1, FIG. 1-2 and FIG. 1-3, respectively.

As illustrated in FIG. 1-1, in the sidelink communication within the network coverage, all the terminals performing sidelink communication are within the coverage of the same base station. Thus, all the terminals can perform sidelink communication based on the same sidelink configuration by receiving the configuration signaling from the base station.

As illustrated in FIG. 1-2, in case of the sidelink communication partly within the network coverage, part of the terminals performing sidelink communication is located within the coverage of the base station, and the part of the terminals can receive the configuration signaling from the base station and perform sidelink communication based on the configuration of the base station. However, the terminal outside the network coverage cannot receive the configuration signaling from the base station. In this case, the terminal outside the network coverage determines the sidelink configuration based on pre-configuration information and information carried in the physical sidelink broadcast channel (PSBCH) transmitted by the terminal within the network coverage, to perform the sidelink communication.

As illustrated in FIG. 1-3, for the sidelink communication outside the network coverage, all the terminals performing sidelink communication are located outside the network coverage, and all the terminals determine sidelink configuration based on pre-configuration information, to perform the sidelink communication.

**Resource selection modes in sidelink communication**

A device to device (D2D) communication is a sidelink transmission technology based on D2D, which is different from the traditional cellular system in which communication data is received or transmitted through the base station, thus having higher spectral efficiency and lower transmission delay. In sidelink communication, terminal-to-terminal direct communication is adopted. The third generation partnership project (3GPP) defines two transmission modes including a first mode and a second mode.

First mode: transmission resources for the terminal are allocated by the base station, and the terminal transmits data on the sidelink based on the resources allocated by the base station. The base station may allocate resources for a single transmission to the terminal, or may allocate resources for a semi-static transmission to the terminal. As illustrated in FIG. 1-1, the terminal is located within the network coverage, and the network allocates the transmission resources used for the sidelink transmission to the terminal.

Second mode: the terminal selects, from the resource pool, a resource for transmission of data. As illustrated in FIG. 1-3, the terminal is located outside the coverage of the cell, and the terminal autonomously selects, from the pre-configured resource pool, a transmission resource for sidelink transmission. Alternatively, as illustrated in FIG. 1-1, the terminal autonomously selects, from the resource pool configured by the network, a transmission resource for sidelink transmission.

The resource selection in the second mode is performed according to the following operations 1 to 2.

At the operation 1: the terminal takes all the available resources in a resource selection window as a resource set A; and the terminal takes remaining resources, after performing resource exclusion, in the set A as a candidate resource set.

If the terminal transmits data in certain slots within a sensing window without performing sensing, all the resources in the slots in the resource selection window (which can also be referred to as a selection window for short) corresponding to the certain slots are excluded. The terminal determines the corresponding slots in the selection window by using the value set of the "resource reservation period" field in the applied resource pool configuration.

If a physical sidelink control channel (PSCCH) is monitored by the terminal in a resource sensing window (also referred to as the sensing window for short), the terminal measures a reference signal received power (RSRP) of the PSCCH or an RSRP of a physical sidelink shared channel (PSSCH) scheduled by the PSCCH. If the measured RSRP is greater than an SL-RSRP threshold, and it is determined that the reserved resource is within the resource selection window based on the resource reservation information in the sidelink control information (SCI) transmitted in the PSCCH, the corresponding resources are excluded from the set A. If the remaining resources in the resource set A are less than X% of all resources in the resource set A before performing the resource exclusion, the SL-RSRP threshold is increased by 3dB, and the operation 1 is re-executed. The possible values of X are {20, 35, 50}, and the terminal determines the parameter X from the value set based on the priority of data to be transmitted. Moreover, the SL-RSRP threshold is related to the priority carried in the PSCCH monitored by the terminal and the priority of data to be transmitted by the terminal.

At the operation 2: the terminal randomly selects several resources from the candidate resource set as transmission resources for initial transmission and retransmission.

It should be noted that in the embodiments of the disclosure, the first mode may also be referred to as a first resource selection mode, and the second mode may also be referred to as a second resource selection mode. The names of the first mode and the second mode are not limited in the technical solutions of the embodiments of the disclosure.

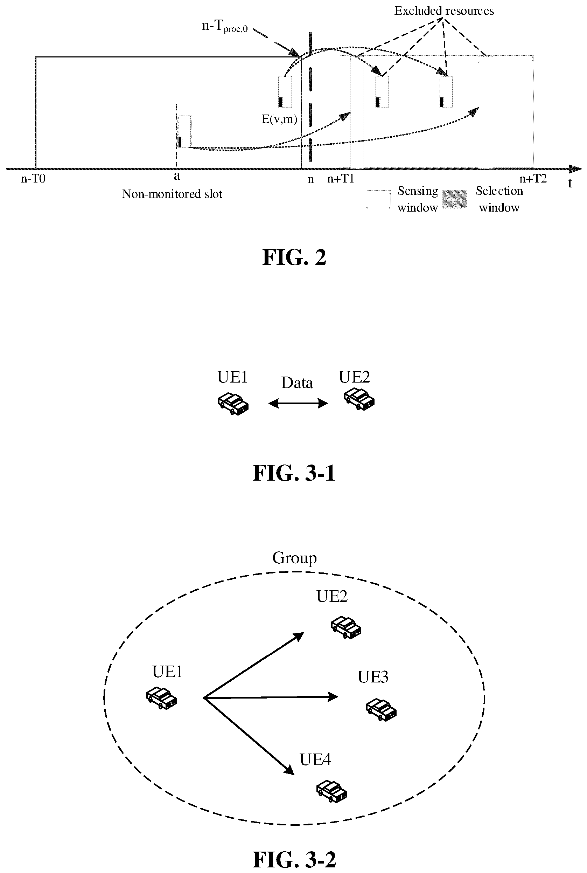

As illustrated in FIG. 2, the terminal triggers a resource selection or a resource reselection at slot n, and the resource selection window starts from n+T1 and ends at n+T2. $0 \leq T1 \leq T_{proc,1}$, where $T_{proc,1}$ is 3 slots, 5 slots, 9 slots, or 17 slots when the subcarrier spacing is 15 kHz, 30 kHz, 60 kHz, or 120 kHz. If $T_{2min}$ is less than the remaining delay budget of the service, $T_{2min} \leq T2 \leq$ the remaining delay budget of the service, otherwise, T2 is equal to the remaining packet delay budget (PDB) in units of slots. The value set of $T_{2min}$ is $\{1, 5, 10, 20\} * 2^{\mu}$ slots, where $\mu = 0, 1, 2, 3$ which corresponds to the subcarrier spacings of 15 kHz, 30 kHz, 60 kHz, 120 kHz, respectively. The terminal determines $T_{2min}$ from the value set based on the priority of the data to be transmitted by the terminal itself. [n+T1, n+T2] is referred to as the resource selection window.

The terminal performs resource sensing from n-T0 to $n-T_{proc,0}$, the value of T0 is 100 milliseconds or 1100 milliseconds. When the subcarrier spacing is 15 kHz, 30 kHz, 60 kHz, or 120 kHz, $T_{proc,0}$ is 1 slot, 1 slot, 2 slots, or 4 slots. [n-T0, n- $T_{proc,0}$] is referred to as the resource sensing window.

The resource selection process in the second mode is performed according to the following two operations 1 to 2.

At the operation 1: a physical layer of the terminal excludes resources that are not suitable for the sidelink transmission from the resource selection window based on a channel sensing result. The physical layer of the terminal determines the resource set A after performing the resource exclusion as a candidate resource set and reports the candidate resource set to a higher layer, i.e., a medium access control (MAC) layer of the terminal.

The terminal takes all available resources belonging to the resource pool used by the terminal within the resource selection window as the resource set A. Any resource in the set A is denoted as R (x, y), where x and y respectively indicate the frequency domain position and the time domain position of the resource, which represent a resource composed of L_subch consecutive sub-channels starting from the sub-channel x in the slot y. The initial number of the resources in the set A is recorded as $M_{total}$.

At the operation 1-1: if the terminal transmits data in slot a within the sensing window without performing sensing, the terminal will determine whether the slot a + q * Prxlg overlaps with the resource R (x, y + j * Ptxlg). If the slot a + q * Prxlg overlaps with the resource R (x, y + j * Ptxlg), the resource R (x, y) is excluded from the resource set A. Herein, j = 0, 1, 2, 3... C-1, where C is determined by a random counter value generated by the terminal. Ptxlg is the number of logical slots into which the resource reservation period Ptx of the terminal is converted. Prxlg is the number of logical slots into which Prx is converted, where Prx is any allowable resource reservation period in the resource pool. If Prx < Tscal and n-m ≤ Prxlg,

$Q = \lceil Tscal/Prx \rceil$. Otherwise, Q = 1. Tscal is equal to a value of T2 converted to milliseconds.

At the operation 1-2: if the sidelink control information transmitted on the PSCCH is monitored by the terminal in the v-th frequency domain resource in the slot m E (v, m) within the sensing window, the terminal measures the SL-RSRP of the PSCCH or the SL-RSRP of the PSSCH scheduled by the PSCCH (i.e., the SL-RSRP of the corresponding PSSCH transmitted in the same slot as the PSCCH). If the measured SL-RSRP is greater than the SL-RSRP threshold and the resource reservation between TBs is activated in the resource pool applied by the terminal, the terminal assumes that the sidelink control information with the same content is received in slot m + q * Prxlg, where q = 1, 2, 3... Q. If Prx < Tscal and n-m ≤ Prxlg, $Q = \lceil Tscal/Prx \rceil$. Otherwise, Q = 1. Tscal is equal to a value of T2 converted to milliseconds. Prxlg is the number of logical slots into which Prx is converted, where Prx is the resource reservation period indicated by the "resource reservation period" field in the sidelink control information transmitted on the PSCCH monitored by the terminal. The terminal will determine whether the resources indicated by the "time resource assignment" and "frequency resource assignment" fields of the sidelink control information received in the slot m and the Q pieces of sidelink control information assumed to be received overlap with the resource R (x, y + j * Ptxlg), and if so, the corresponding resource R (x, y) is excluded from the set A. The j = 0, 1, 2, 3... C-1, where C is determined by a random counter value generated by the terminal. Ptxlg is the number of logical slots into which Ptx is converted, and Ptx is the resource reservation period determined by the terminal performing resource selection.

The RSRP threshold is determined by the priority P1 carried in the PSCCH monitored by the terminal and the priority P2 of the data to be transmitted by the terminal. The configuration of the resource pool applied by the terminal includes an SL-RSRP threshold list, including SL-RSRP thresholds corresponding to all priority combinations (P1, P2). The configuration of the resource pool may be configured by the network or pre-configured. If remaining resources in resource set A after performing the resource exclusion are less than $M_{total}$ * X%, the SL-RSRP threshold is raised by 3 dB, and the operation 1 is re-executed. The possible values of X are {20, 35, 50}, the configuration of the resource pool applied by the terminal includes correspondences between the priorities and the possible values of X, and the terminal determines the value of X based on the priority of the data to be transmitted and the correspondences.

At the operation 2: the MAC layer of the terminal randomly selects resources from the reported candidate resource set to transmit data. That is, the terminal randomly selects resources from the candidate resource set to transmit data.

## Transmission mode in NR-V2X

In NR-V2X, autonomous driving needs to be supported, so higher requirements are put forward for data interaction between vehicles, such as higher throughput, lower latency, higher reliability, larger coverage, more flexible resource allocation.

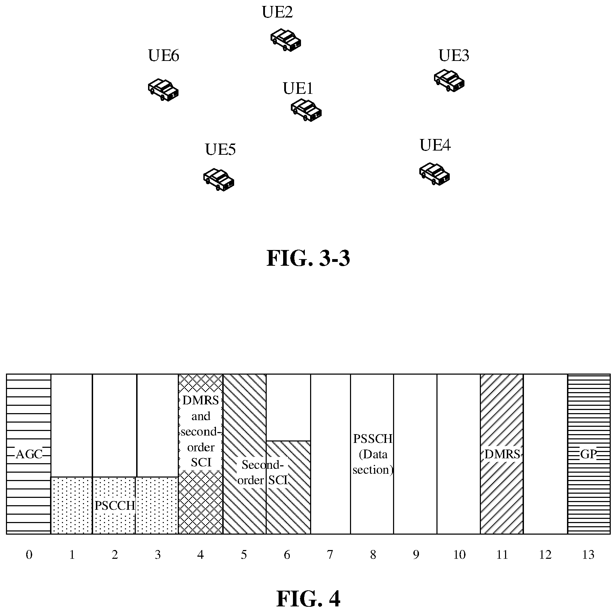

In LTE-V2X, a broadcast transmission mode is supported. In NR-V2X, unicast and multicast transmission modes are introduced. For the unicast transmission, there is only one terminal at the receiving end. As illustrated in FIG. 3-1, the unicast transmission is performed between UE1 and UE2. For the multicast transmission, the receiving end includes all terminals in a communication group or all terminals within a certain transmission distance. As illustrated in FIG. 3-2, UE1, UE2, UE3 and UE4 form a communication group, in which UE1 transmits data, and other terminals in the communication group are receiving ends. For the broadcast transmission mode, the receiving end is any terminal around the transmitting end terminal. As illustrated in FIG. 3-3, UE1 is the transmitting end terminal, and other terminals (i.e., UE2 to UE6) around UE1 are all receiving ends.

**Two-order SCI mechanism in NR-V2X**

A two-order SCI is introduced in NR-V2X. A first-order SCI is carried in the PSCCH, and is used to indicate information such as transmission resources for the PSSCH, reserved resource information, a modulation and coding scheme (MCS) level, and/or a priority. A second-order SCI is transmitted in the resources for the PSSCH and is demodulated by using a demodulation reference signal (DMRS) for the PSSCH, and is used to indicate information for data demodulation, such as a transmitting end identifier (ID), a receiving end ID, a hybrid automatic repeat reQuest (HARQ) ID, and/or a new data indicator (NDI). The second-order SCI is mapped starting from the first DMRS symbol of the PSSCH, with mapping first in the frequency domain and then in the time domain. As illustrated in FIG. 4, the PSCCH occupies 3 symbols (symbols 1, 2 and 3), and the DMRS for the PSSCH occupies symbols 4 and 11. The second-order SCI is mapped starting from the symbol 4, and is frequency division multiplexed with the DMRS on symbol 4. The second-order SCI is mapped into symbols 4, 5 and 6, and the resource size occupied by the second-order SCI depends on the number of bits of the second-order SCI.

**PSFCH in NR-V2X**

In R16 NR-V2X, a sequence type of Physical Sidelink Feedback Channel (PSFCH), which is referred to as PSFCH format 0, is supported. This type of PSFCH occupies a physical resource block (PRB) in the frequency domain and an orthogonal frequency division multiplexing (OFDM) symbol in the time domain, and the adopted sequence type is the same as PUCCH format 0. In a resource pool, PSFCH resources are configured with a periodicity of 1, 2 or 4 slots, and the PSFCH resources are located on the last OFDM symbol available for the sidelink transmission in the slot in which the PSFCH resources exist. However, in order to support the transmit-receive switching and the automatic gain control (AGC) adjustment, two OFDM symbols ahead of the symbol in which the PSFCH is located are used for the transmit-receive switching and the AGC adjustment, respectively. Further, PSCCH and PSSCH transmissions are not allowed on the above three OFDM symbols. In R16 NR-V2X, the PSFCH is only used to carry HARQ feedback information, and the capacity of one PSFCH is one bit.

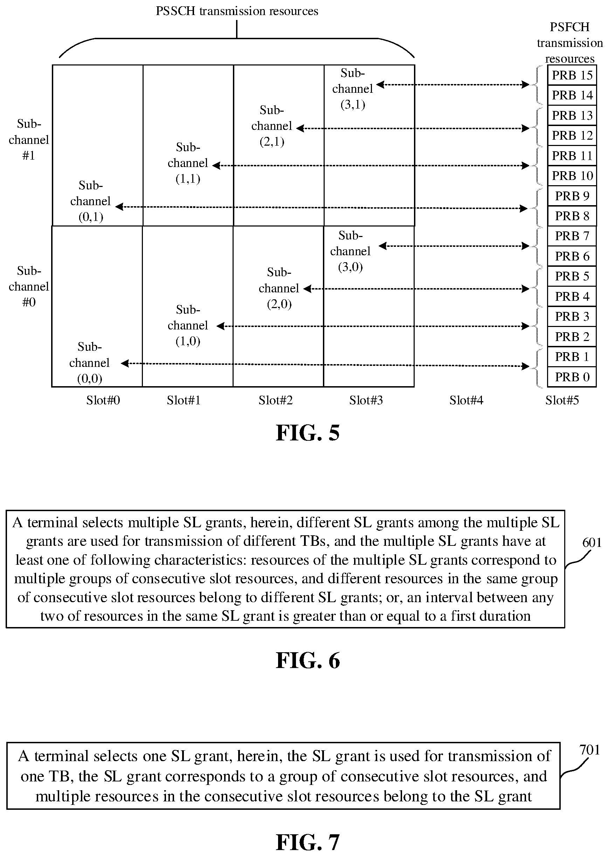

The transmission resources for the PSFCH are determined based on the time-frequency positions of the transmission resources for the PSSCH corresponding to the PSFCH. If the terminal receives the PSSCH in a certain slot, the terminal transmits the HARQ feedback information for the PSSCH in the first slot, in which the PSFCH resource exists, after satisfying the minimum interval, where the minimum interval is configured by the parameter sl-MinTimeGapPSFCH. In NR-V2X, the receiving terminal determines the transmission resources for the PSFCH corresponding to the PSSCH based on information of the slot and sub-channel in which the PSSCH is located. Specifically, the transmission resource set for the PSFCH is divided into multiple sub-sets based on the PSFCH periodicity parameter and the number of sub-channels available for the PSSCH transmission in the resource pool configuration information, and the PSFCH transmission resources in each sub-set correspond to the PSSCH transmission in one slot and one sub-channel. As illustrated in FIG. 5, the specific PSFCH transmission resource is determined in the sub-set based on the terminal identifier information.

In NR-V2X, the following two PSFCH resource determination methods are supported. Use of which PSFCH resource determination method is configured based on a higher layer signaling.

First method: transmission resources for the PSFCH are determined based on the first sub-channel of the PSSCH frequency domain resources.

Second method: transmission resources for the PSFCH are determined based on all sub-channels occupied by the PSSCH in frequency domain.

For the resource determination method in the first method, since the transmission resources for the PSFCH are determined only based on the first sub-channel occupied by the PSSCH, no matter how many sub-channels PSSCH occupies, the number of feedback resources for the PSFCH corresponding to the PSSCH is fixed. For the second method, since the number of transmission resources for the PSFCH is determined based on the number of sub-channels occupied by the PSSCH, the more sub-channels the PSSCH occupies, the more transmission resources for the PSFCH are. The second method is more suitable for a scenario that requires more sidelink HARQ feedback resources, for example, the second type of sidelink HARQ feedback mode in the multicast.

The set $R_{\mathrm{PRB,CS}}^{\mathrm{PSFCH}}$ of PSFCH transmission resources corresponding to a PSSCH can be determined based on the slots and the sub-channels used for transmitting the PSSCH. The indexes of the PSFCH transmission resources in the resource set are determined first in the order of resource bocks (RBs) from low to high and then in the order of cyclic shift (CS) pairs from low to high. Further, in the resource set, the transmission resources for the PSFCH are determined by the following formula: $\left( P_{ID} + M_{\mathrm{ID}} \right) \bmod R_{\mathrm{PRB,CS}}^{\mathrm{PSFCH}}$.

Herein, $P_{ID}$ represents transmitting end ID information, i.e., a source ID of a transmitting end terminal carried in the SCI. For the unicast sidelink HARQ feedback mode or the NACK-only multicast sidelink HARQ feedback mode, $M_{ID}$=0. For the ACK/NACK multicast sidelink HARQ feedback mode, $M_{ID}$ represents an intra-group identifier of a receiving terminal configured by the higher layer.

In NR-V2X, the PSFCH resources are configured by the SL-PSFCH-Config-r16 signaling, the contents of which are shown in the following table. Herein, sl-PSFCH-Period-r16 is used to configure the period of the PSFCH resources, sl-PSFCH-RB-Set-r16 is used to configure the PRBs available for the PSFCH transmission on the OFDM symbols in which the PSFCH resources are located, sl-NumMuxCS-Pair-r16 is used to configure the number of cyclic shifts allowed for the PFSCH sequence within one PRB, sl-MinTimeGapPSFCH-r16 is used to configure the minimum time gap between the PSFCH and the PSSCH associated with the PSFCH, sl-PSFCH-HopID-r16 is used to configure the frequency hopping ID of the PSFCH which is used for determining the sequence of the PSFCH, and sl-PSFCH-CandidateResourceType-r16 is used to configure the determination mode of the PSFCH candidate resources.

Table 1

```
SL-PSFCH-Config-r16 ::=              SEQUENCE {
      sl-PSFCH-Period-r16                            ENUMERATED  {sl0,  sl1,  sl2,  sl4}
OPTIONAL,     -- Need M
      sl-PSFCH-RB-Set-r16                            BIT   STRING   (SIZE   (10..275))
OPTIONAL,     -- Need M
      sl-NumMuxCS-Pair-r16                           ENUMERATED  {n1,  n2,  n3,  n6}
OPTIONAL,     -- Need M
      sl-MinTimeGapPSFCH-r16                          ENUMERATED   {sl2,   sl3}
OPTIONAL,     -- Need M
      sl-PSFCH-HopID-r16                              INTEGER    (0..1023)
OPTIONAL,     -- Need M
      sl-PSFCH-CandidateResourceType-r16   ENUMERATED   {startSubCH,   allocSubCH}
OPTIONAL,     -- Need M
      ...
}
```

**Multiple consecutive slots transmission**

On unlicensed spectrum, a communication device needs to perform Listen Before Talk (LBT) first and accesses the channel only after the LBT is successful. After the communication device successfully performs LBT and accesses the channel, the time the communication device occupies the channel is referred to as channel occupancy time (COT). Within the COT, the communication device can continuously or discontinuously perform the transmission. Therefore, in order to make more full use of the COT initiated after successful LBT, the concept of multiple consecutive slots transmission (MCSt) may be introduced into the SL-U system, i.e., the communication device continuously perform the transmission on multiple slots to improve the utilization rate of the COT. Moreover, consecutive channel use/occupation is also beneficial for competing with different systems for channels. For example, when the SL-U terminal adopts the MCSt transmission, other users (such as WIFI users) cannot successfully access the channel through LBT because the channel is continuously occupied.

If the MCSt transmission mode is adopted in the SL-U system, multiple consecutive slots can be used to transmit the same Transport Block (TB) or different TBs, and it is required to clarify how to select transmission resources for the TB(s). Therefore, the following technical solutions according to the embodiments of the disclosure are proposed.

It should be understood that the terms "system" and "network" in the present disclosure may usually be used interchangeably. In the disclosure, the term "and/or" refers to only an association relationship for describing associated objects and represents that three relationships may exist. For example, A and/or B may represent three cases: i.e., only A exists, both A and B exist, and only B exists. Furthermore, character "/" in the disclosure usually represents that previous and next associated objects form an "or" relationship.

For convenience of understanding of the technical solutions of the embodiments of the disclosure, the technical solutions of the disclosure will be described in detail below with reference to specific embodiments. The above related technologies may be used as alternative solutions and may be combined with the technical solutions of the embodiments of the disclosure in various ways, all of which belong to the scope of protection of the embodiments of the disclosure. The embodiments of the disclosure include at least part of the following contents.

FIG. 6 is a first schematic flowchart of a resource selection method provided in an embodiment of the disclosure. As illustrated in FIG. 6, the resource selection method includes the following operation 601.

At the operation 601: a terminal selects multiple sidelink (SL) grants. Different SL grants among the multiple SL grants are used for transmission of different TBs. The multiple SL grants have at least one of following characteristics: resources of the multiple SL grants correspond to multiple groups of consecutive slot resources, and different resources in the same group of consecutive slot resources belong to the different SL grants; or an interval between any two of resources in the same SL grant is greater than or equal to a first duration.

Herein, one group of consecutive slot resources is composed of resources within multiple consecutive slots, and one group of continuous slot resources may also be understood as one MCSt resource.

In the embodiment of the disclosure, the terminal selects multiple SL grants, and different SL grants among the multiple SL grants are used for transmissions of different TBs. The multiple SL grants have at least one of a first characteristic or a second characteristic.

The first characteristic: resources of the multiple SL grants correspond to multiple groups of consecutive slot resources, and different resources in the same group of consecutive slot resources belong to the different SL grants.

The second characteristic: an interval between any two of resources in the same SL grant is greater than or equal to a first duration.

In the embodiment of the disclosure, the operation that the terminal selects multiple SL grants may be implemented through several methods as follows.

**Method 1**

In some implementations, the terminal selects multiple resource groups from a first resource set. The first resource set is determined by a physical layer of the terminal and is reported to a MAC layer. The terminal determines the multiple SL grants based on the multiple resource groups.

Herein, the first resource set may be a resource set obtained by the physical layer of the terminal after excluding resources that are not suitable for sidelink transmission from the resource selection window based on a channel sensing result. For the resource exclusion process, the references may be made to the above-described related methods. The physical layer of the terminal reports the first resource set obtained after performing the resource exclusion to the MAC layer of the terminal. The MAC layer of the terminal selects the multiple resource groups from the first resource set, and determines the multiple SL grants based on the multiple resource groups.

In some implementations, the terminal selects one resource group from the first resource set. If the number of selected resource groups is less than G, the terminal continues to select one resource group from the first resource set until the number of the selected resource groups is equal to G or no resource group can be continued to be selected from remaining resources, where G is a positive integer.

Herein, the operation that the terminal selects the multiple resource groups from the first resource set may be implemented through several methods as follows.

**Method 1-1**

In some implementations, the selection process of the resource groups may be implemented through the following operations.

At the operation 1-A: the terminal selects R resources satisfying a first condition from the first resource set, where the R resources form one resource group, and R is a positive integer. The first condition includes at least one of: an interval between any two of the R resources is greater than or equal to the first duration; or a resource used for TB retransmission among the R resources can be indicated by a previously transmitted SCI.

Herein, the first duration may be recorded as Tmin.

Herein, the previously transmitted SCI may be a SCI corresponding to the last TB transmission, and the SCI is a first-order SCI carried in a PSCCH.

At the operation 1-B: if the number of the selected resource groups is less than G, the terminal selects R resources satisfying a second condition from remaining resources of the first resource set, where the R resources form one resource group, and R is a positive integer. The second condition includes at least one of: an interval between any two of the R resources is greater than or equal to the first duration; a resource used for TB retransmission among the R resources can be indicated by a previously transmitted SCI; or any one of the R resources and at least one of resources in the selected resource group are located in adjacent slots.

Herein, the first duration may be recorded as Tmin.

Herein, the previously transmitted SCI may be a SCI corresponding to the last TB transmission, and the SCI is a first-order SCI carried in a PSCCH.

Herein, being located in the adjacent slots refer to being located in adjacent logical slots, where the logical slots refers to slots located in the current resource pool.

The above operation 1-B is repeatedly executed until the number of selected resource groups is equal to G or no further resource group can be selected from remaining resources.

In the above method, G represents the maximum number of SL grants for the terminal. R represents the maximum number of transmissions for one TB.

## Method 1-2

In some implementations, the selection process of the resource groups may be implemented through the following operations.

At the operation 2-A: the terminal selects R resources satisfying a first condition from the first resource set, where the R resources form one resource group, and R is a positive integer. The first condition includes at least one of: an interval between any two of the R resources is greater than or equal to the first duration; or a resource used for TB retransmission among the R resources can be indicated by a previously transmitted SCI.

Herein, the first duration may be recorded as Tmin.

Herein, the previously transmitted SCI may be a SCI corresponding to the last TB transmission, and the SCI is a first-order SCI carried in a PSCCH.

At the operation 1-B: if the number of the selected resource groups is less than G, the terminal determines a first candidate resource set and a second candidate resource set from the first resource set. The terminal selects R resources satisfying a first condition from the first candidate resource set and/or the second candidate resource set, where the R resources form one resource group, and R is a positive integer. The first condition includes at least one of: an interval between any two of the R resources is greater than or equal to the first duration; or a resource used for TB retransmission among the R resources can be indicated by a previously transmitted SCI.

Herein, the first candidate resource set has a following characteristic: any one of resources in the first candidate resource set and at least one of resources in the selected resource group are located in adjacent slots. The second candidate resource set has a following characteristics: the second candidate resource set contains at least part of resources, other than the first candidate resource set, in the first resource set.

Herein, the first duration may be recorded as Tmin.

Herein, the previously transmitted SCI may be a SCI corresponding to the last TB transmission, and the SCI is a first-order SCI carried in a PSCCH.

In some implementations, the terminal selects R' resources from the first candidate resource set. If R'<R, the terminal selects R-R' resources from the second candidate resource set, where the selected R resources satisfy the first condition. If R'= R, the terminal does not need to select resources from the second candidate resource set, where the selected R resources satisfy the first condition.

The above operation 2-B is repeatedly executed until the number of selected resource groups is equal to G or no further resource group can be selected from remaining resources.

In the above method, G represents the maximum number of SL grants for the terminal. R represents the maximum number of transmissions for one TB.

After the terminal divides the multiple groups of consecutive slot resources into multiple resource groups, the terminal considers the multiple resource groups as the multiple SL grants, where each resource group corresponds to a respective SL grant. Alternatively, the terminal considers repetitions of the multiple resource groups in multiple cycles as the multiple SL grants, where repetitions of each resource group in the multiple cycles correspond to a respective SL grant.

For example, the terminal determines G resource groups and selects g resource groups from the G resource groups, where $1 \leq g \leq G$. The terminal considers the g resource groups as g SL grants, where each resource group corresponds to a respective SL grant. Alternatively, the terminal considers repetitions of the g resource groups in the multiple cycles as g SL grants, where repetitions of each resource group in the multiple cycles correspond to a respective SL grant.

## Method 2

In some implementations, the terminal selects the multiple groups of consecutive slot resources from a first resource set. The first resource set is determined by a physical layer of the terminal and is reported to a MAC layer. The terminal divides the multiple groups of the consecutive slot resources into multiple resource groups. The terminal determines the multiple SL grants based on the multiple resource groups.

Herein, the first resource set may be a resource set obtained by the physical layer of the terminal after excluding resources that are not suitable for sidelink transmission from the resource selection window based on a channel sensing result. For the resource exclusion process, the references may be made to the above-described related methods. The physical layer of the terminal reports the first resource set obtained after performing the resource exclusion to the MAC layer of the terminal. The MAC layer of the terminal selects the multiple groups of consecutive slot resources from the first resource set, divides the multiple groups of consecutive slot resources into multiple resource groups, and determines the multiple SL grants based on the multiple resource groups.

In some implementations, the operation that the terminal selects the multiple groups of consecutive slot resources from the first resource set may be implemented through the following processes.

The terminal selects R groups of consecutive slot resources from the first resource set, wherein the R groups of consecutive slot resources have at least one of the following characteristics: the number of resources contained in each of the R groups of consecutive slot resources is g, where g is a positive integer; g resources in the same group of consecutive slot resources are located in consecutive slots; or an interval between any two of the R groups of consecutive slot resources is greater than or equal to the first duration.

Herein, the first duration may be recorded as Tmin.

In some implementations, the operation that the terminal divides the multiple groups of consecutive slot resources into the multiple resource groups may be implemented through the following processes.

The terminal divides the R groups of consecutive slot resources into g resource groups, where different resources in the same resource group belong to different consecutive slot resources.

In the above method, G represents the maximum number of SL grants for the terminal. R represents the maximum number of transmissions for one TB.

After the terminal divides the multiple groups of consecutive slot resources into multiple resource groups, the terminal determines the multiple resource groups as the multiple SL grants, where each resource group corresponds to a respective SL grant. Alternatively, the terminal determines repetitions of the multiple resource groups in multiple cycles as the multiple SL grants, where repetitions of each resource group in the multiple cycles correspond to a respective SL grant.

In the above method, the first duration is determined based on at least one of: a time interval between a PSSCH and a PSFCH corresponding to the PSSCH; a duration required for the terminal to receive the PSFCH; a duration required for the terminal to process the PSFCH; a duration required for the terminal to prepare for SL retransmission; or a transmit-receive switching duration required by the terminal.

In the technical solutions of the embodiments of the disclosure, the terminal can select consecutive slot resources for transmission of different TBs originating from the same logical channel, which can ensure that each TB is transmitted the same number of times, and that a corresponding PSFCH feedback resource exists for each TB.

FIG. 7 is a second schematic flowchart of a resource selection method provided in an embodiment of the disclosure. As illustrated in FIG. 7, the resource selection method includes the following operation 701.

At the operation 701: a terminal selects one SL grant. Herein, the SL grant is used for transmission of one TB, the SL grant corresponds to a group of consecutive slot resources, and multiple resources in the consecutive slot resources belong to the SL grant.

Herein, one group of consecutive slot resources is composed of resources within multiple consecutive slots, and one group of continuous slot resources may also be understood as one MCSt resource.

In the embodiment of the disclosure, the terminal selects one SL grant. Herein, the SL grant is used for transmission of one TB, the SL grant corresponds to a group of consecutive slot resources, and multiple resources in the consecutive slot resources belong to the SL grant.

In the embodiment of the disclosure, the operation that the terminal selects the one SL grant may be implemented through the following operations.

The terminal selects one resource group from a first resource set, where the first resource set is determined by a physical layer of the terminal and is reported to a MAC layer. The terminal determines the one SL grant based on the one resource group.

Herein, the first resource set may be a resource set obtained by the physical layer of the terminal after excluding resources that are not suitable for sidelink transmission from the resource selection window based on a channel sensing result. For the resource exclusion process, the references may be made to the above-described related methods. The physical layer of the terminal reports the first resource set obtained after performing the resource exclusion to the MAC layer of the terminal. The MAC layer of the terminal selects one resource group from the first resource set, and determines the one SL grant based on the one resource group.

Herein, the operation that the terminal selects the one resource group from the first resource set may be implemented through methods as follows.

**Method I**

In some implementations, the selection process of the resource group may be implemented through the following operations.

The terminal selects R resources satisfying a third condition from the first resource set, where the R resources form the one resource group, and R is a positive integer. The third condition includes at least one of: at least part of the R resources are located within consecutive slots; or a resource used for TB retransmission among the R resources can be indicated by a previously transmitted SCI.

Herein, the previously transmitted SCI may be a SCI corresponding to the last TB transmission, and the SCI is a first-order SCI carried in a PSCCH.

In some implementations, the terminal selects R' resources located within the consecutive slots from the first resource set. If R'<R, the terminal selects R-R' resources from remaining resources of the first resource set, where the resource used for the TB retransmission among the selected R resources can be indicated by the previously transmitted SCI. If R'= R, the terminal ends the resource selection, where the resource used for the TB retransmission among the selected R resources can be indicated by the previously transmitted SCI.

In the above method I, the interval between resources is not limited, thus the time for the HARQ-ACK feedback is not guaranteed. For a TB transmitted using the SL grant, a receiving end of the TB does not feed back HARQ-ACK information. Alternatively, for a TB transmitted using the SL grant, a receiving end of the TB feeds back HARQ-ACK information on a PSFCH corresponding to the TB.

**Method II**

In some implementations, the selection process of the resource group may be implemented through the following operations.

The terminal selects R resources satisfying a fourth condition from the first resource set, where the R resources form the one resource group, and R is a positive integer. The fourth condition includes at least one of: at least part of the R resources are located within consecutive slots; an interval between any two resources in non-adjacent slots among the R resources is greater than or equal to a first duration; or a resource used for the TB retransmission among the R resources can be indicated by a previously transmitted SCI.

Herein, the first duration may be recorded as Tmin.

Herein, the previously transmitted SCI may be a SCI corresponding to the last TB transmission, and the SCI is a first-order SCI carried in a PSCCH.

In the above method II, the interval between resources is limited, thus the time for the HARQ-ACK feedback can be guaranteed (at least partly guaranteed). For a TB transmitted using the SL grant, if an interval between resources used for two transmissions of the TB is greater than or equal to the first duration, a receiving end of the TB feeds back HARQ-ACK information; if the interval between the resources used for two transmissions of the TB is less than the first duration, the receiving end of the TB does not feed back the HARQ-ACK information.

In the above method, R represents the maximum number of transmissions for one TB.

After one resource set is selected, the terminal determines the one resource group as the one SL grant. Alternatively, the terminal determines repetitions of the one resource group in multiple cycles as the one SL grant.

In the above method, the first duration is determined based on at least one of: a time interval between a PSSCH and a PSFCH corresponding to the PSSCH; a duration required for the terminal to receive the PSFCH; a duration required for the terminal to process the PSFCH; a duration required for the terminal to prepare for SL retransmission; or a transmit-receive switching duration required by the terminal. For example, the first duration equals a sum of at least one of: the time interval between the PSSCH and the PSFCH corresponding to the PSSCH; the duration required for the terminal to receive the PSFCH; the duration required for the terminal to process the PSFCH; the duration required for the terminal to prepare for the SL retransmission; or the transmit-receive switching duration required by the terminal.

It should be noted that in the embodiments of the disclosure, resources contained in the resource set reported by the physical layer of the terminal may be single-slot resources or may be multiple consecutive slots resources.

In the technical solution of the embodiment of the disclosure, the consecutive slot resources are used for retransmission of the same TB, so that the restriction of resource selection between different HARQ processes can be avoided, and the MCSt resource is selected as much as possible to ensure the occupation for the channel.

Hereinafter, the technical solutions of the embodiments of the present application will be described with reference to specific application examples.

**First application example**

One group of consecutive slot resources is composed of resources within multiple consecutive slots, and one group of consecutive slot resources may also be understood as one MCSt resource. Different resources in one group of consecutive slot resources belong to different SL grants, and different SL grants are used for transmissions of different TBs (one SL grant is used for transmission of one TB). There may be multiple groups of consecutive slot resources, and the interval between any two of resources belonging to the same SL grant in the multiple groups of consecutive slot resources is greater than or equal to Tmin, so as to ensure that the terminal has sufficient time to perform the HARQ-ACK feedback for the transmission of the TB.

In the application example, the terminal first selects one SL grant, and then selects other SL grants, where different SL grants occupy adjacent slots. Specifically, the terminal operates in the second mode (i.e., a mode of the terminal autonomously selecting resources), and the MAC layer of the terminal selects resources according to the following operations 1 to 5.

At the operation 1: the terminal determines the maximum number R of transmissions for one TB and the required maximum number G of SL grants.

Herein, G is related to the priority (P2) used by the terminal when performing resource selection, for example, G is less than or equal to the number of slots included in the maximum channel occupancy time (mcot) corresponding to P2. The correspondence between P2 and the mcot is defined by the standards or is configured by the network or is pre-configured.

At the operation 2: the MAC layer of the terminal selects a first resource group from the resource set reported by the physical layer of the terminal, where the first resource group includes R resources, located in different slots, for initial transmission and retransmission of the same TB.

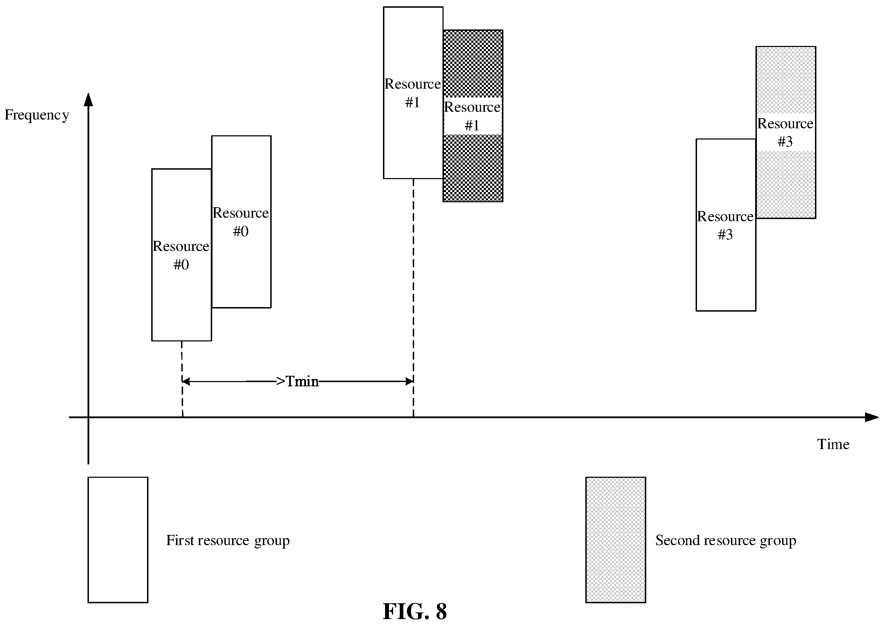

Here, it is required to satisfy the following requirements for selecting the first resource group. 1) If PSFCH resources are configured in the resource pool, an interval between any two of the R resources is greater than or equal to Tmin, as illustrated in FIG. 8; and 2) a resource used for TB retransmission among the R resources can be indicated by a previously transmitted SCI.

At the operation 3: if the number of the selected resource groups is equal to G, the operation 5 is executed, otherwise, the operation 4 is executed.

At the operation 4: if at least R resources satisfying the following conditions exist in the resource set reported by the physical layer of the terminal, R resources satisfying the following conditions are selected from the resource set as another resource group, and then the operation 3 is executed, otherwise, the operation 5 is executed.

1) If the PSFCH resources are configured in the resource pool, the interval between any two resources is greater than or equal to Tmin; 2) a resource used for TB retransmission among the R resources can be indicated by a previously transmitted SCI; and 3) any one resource and at least one of the resources in the selected resource group are located in adjacent logical slots, as illustrated in the first resource group and the second resource group in FIG. 8. Herein, the logical slots refer to slots located in the current resource pool.

At the operation 5: the selected g resource groups are determined as g SL grants. Alternatively, if the selected resources are used for data transmission in multiple cycles, repetitions of the selected g resource groups in multiple cycles are determined as g SL grants. Herein, g is less than or equal to G, and g is the number of actually selected resource groups.

In the above example, Tmin includes a sum of at least one of: a time interval between the ending OFDM symbol of the PSSCH and the starting OFDM symbol of the PSFCH corresponding to the PSSCH; a duration required to receive and process the PSFCH; a duration required to prepare for SL retransmission; or a transmit-receive switching duration required by the terminal.

**Second Application example**

One group of consecutive slot resources is composed of resources within multiple consecutive slots, and one group of consecutive slot resources may also be understood as one MCSt resource. Different resources in one group of consecutive slot resources belong to different SL grants, and different SL grants are used for transmissions of different TBs (one SL grant is used for transmission of one TB). There may be multiple groups of consecutive slot resources, and the interval between any two of resources belonging to the same SL grant in the multiple groups of consecutive slot resources is greater than or equal to Tmin, so as to ensure that the terminal has sufficient time to perform the HARQ-ACK feedback for the transmission of the TB.

In the application example, the terminal selects R groups of consecutive slot resources composed of g adjacent slots as g SL grants. Specifically, the terminal operates in the second mode (i.e., a mode of the terminal autonomously selecting resources), and the MAC layer of the terminal selects resources according to the following operations 1 to 4.

At the operation 1: the terminal determines the maximum number R of transmissions for one TB and the required maximum number G of the SL grants.

Herein, G is related to the priority (P2) used by the terminal when performing resource selection, for example, G is less than or equal to the number of slots included in the maximum channel occupancy time (mcot) corresponding to P2. The correspondence between P2 and the mcot is defined by the standards or is configured by the network or is pre-configured.

At the operation 2: the MAC layer of the terminal selects R groups of consecutive slot resources from the resource set reported by the physical layer of the terminal.

Herein, 1) the number of resources included in each group of consecutive slot resources is g, and g is less than or equal to G; 2) the g resources are located within consecutive logical slots, and the logical slots are slots in the current resource pool; 3) if the PSFCH resources are configured in the resource pool, the R groups of consecutive slot resources are sorted according to the time sequence, herein, the interval between the r-th group of consecutive slot resources and the (r+1)-th group of consecutive slot resources is greater than or equal to Tmin, where $0 \leq r < R-1$.

At the operation 3: the selected R groups of consecutive slot resources are divided into g resource groups, where the i-th resource group is composed of the i-th resources in the R groups of consecutive slot resources, where $0 \leq i < g-1$.

At the operation 4: the selected g resource groups are determined as g SL grants. Alternatively, if the selected resources are used for data transmission in multiple cycles, repetitions of the selected g resource groups in multiple cycles are determined as g SL grants.

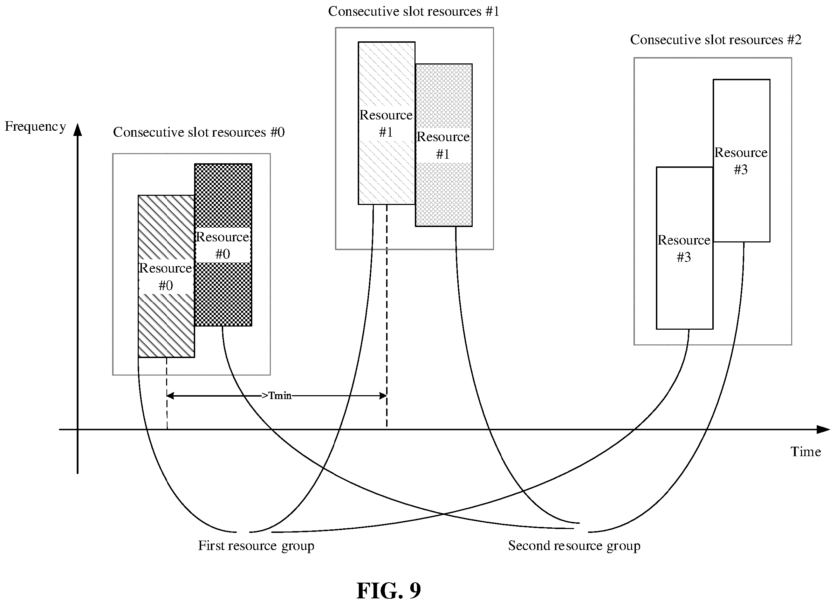

As an example, as illustrated in FIG. 9, in a case where R = 3 and g = 2, the terminal selects three groups of consecutive slot resources, and the three groups of consecutive slot resources are divided into two resource groups.

In the above example, Tmin includes a sum of at least one of: a time interval between the ending OFDM symbol of the PSSCH and the starting OFDM symbol of the PSFCH corresponding to the PSSCH; a duration required to receive and process the PSFCH; a duration required to prepare for SL retransmission; or a transmit-receive switching duration required by the terminal.

### Third application example

In the application example, the terminal preferentially selects resources in slots adjacent to an existing SL grant. Specifically, the terminal operates in the second mode (i.e., a mode of the terminal autonomously selecting resources), and the MAC layer of the terminal selects resources according to the following operations 1 to 5.

At the operation 1: the terminal determines the maximum number R of transmissions for one TB.

At the operation 2: the MAC layer of the terminal determines a first candidate resource set and a second candidate resource set from the resource set reported by the physical layer of the terminal.

Herein, any resource in the first candidate resource set satisfies that the slot in which the resource is located is adjacent to the slot in which the resource included in the SL grant already determined by the terminal is located; and resources included in the second candidate resource set are resources, other than resources belonging to the first candidate resource set, among the resource set reported by the physical layer of the terminal.

If no SL grant has been determined, the first candidate resource set is an empty set.

At the operation 3: the MAC layer of the terminal selects multiple resources satisfying the following conditions from the first candidate resource set. 1) If PSFCH resources are configured in the resource pool, an interval between any two resources is greater than or equal to Tmin; and 2) a resource used for TB retransmission can be indicated by a previously transmitted SCI.

At the operation 4: if at the operation 3, the MAC layer of the terminal can only select R' resources satisfying the conditions, and R'<R, the MAC layer of the terminal selects R-R' resources from the second candidate resource set. Moreover, it is met that 1) if PSFCH resources are configured in the resource pool, an interval between any two of the finally selected R resources is greater than or equal to Tmin; and 2) a resource used for TB retransmission among the finally selected R resources can be indicated by a previously transmitted SCI.

At the operation 5: the selected R resources are determined as one SL grant. Alternatively, if the selected resources are used for data transmission in multiple cycles, repetitions of the selected R resources in multiple cycles are determined as one SL grant.

In the above example, Tmin includes a sum of at least one of: a time interval between the ending OFDM symbol of the PSSCH and the starting OFDM symbol of the PSFCH corresponding to the PSSCH; a duration required to receive and process the PSFCH; a duration required to prepare for SL retransmission; or a transmit-receive switching duration required by the terminal.

### Fourth application example

One group of consecutive slot resources is composed of resources within multiple consecutive slots, and one group of continuous slot resources may also be understood as one MCSt resource. All resources in one of consecutive slot resources belong to the same SL grant and are used for transmission of the same TB.

In the application example, one group of consecutive slot resources belongs to the same SL grant and is used for the partial or full transmission of the same TB, and the time for the HARQ-ACK feedback is not guaranteed. Specifically, the terminal operates in the second mode (i.e., a mode in which the terminal autonomously selects resources), and the MAC layer of the terminal selects resources according to the following operations 1 to 4.

At the operation 1: the terminal determines the maximum number R of transmissions for one TB.

At the operation 2: the MAC layer of the terminal selects multiple resources satisfying the following condition from the resource set reported by the physical layer: the multiple candidate resources are located in consecutive slots.

At the operation 3: if at the operation 2, the MAC layer of the terminal can only select R' resources satisfying the condition, and R'<R, the MAC layer of the terminal selects R-R' resources from remaining resources of the resource set reported by the physical layer. Moreover, it is met that a resource used for TB retransmission among the finally selected R resources can be indicated by a previously transmitted SCI.

At the operation 4: the selected R resources are determined as one SL grant. Alternatively, if the selected resources are used for data transmission in multiple cycles, repetitions of the selected R resources in multiple cycles are determined as one SL grant.

In some implementations, for a TB transmitted using the consecutive slot resources, the receiving end of the TB does not feed back HARQ-ACK information.

In other implementations, for a TB transmitted using the consecutive slot resources, the receiving end of the TB feeds back HARQ-ACK information on the corresponding PSFCH resources.

**Fifth application example**

One group of consecutive slot resources is composed of resources within multiple consecutive slots, and one group of continuous slot resources may also be understood as one MCSt resource. All resources in one of consecutive slot resources belong to the same SL grant and are used for transmission of the same TB.

In the application example, one group of consecutive slot resources belongs to the same SL grant and is used for the partial or full transmission of the same TB, and the time for the HARQ-ACK feedback is partly guaranteed. Specifically, the terminal operates in the second mode (i.e., a mode in which the terminal autonomously selects resources), and the MAC layer of the terminal selects resources according to the following operations 1 to 3.

At the operation 1: the terminal determines the maximum number R of transmissions for one TB.

At the operation 2: the MAC layer of the terminal selects R resources from the resource set reported by the physical layer. The R resources satisfies: 1) if PSFCH resources are configured in the resource pool, the interval between any two resources located in non-adjacent slots among the R resources is greater than or equal to Tmin; and 2) a resource used for TB retransmission among the R resources can be indicated by a previously transmitted SCI.

At the operation 3: the selected R resources are determined as one SL grant. Alternatively, if the selected resources are used for data transmission in multiple cycles, repetitions of the selected R resources in multiple cycles are determined as one SL grant.

In some implementations, if the interval between the resource for transmission of one TB and the next resource for retransmission of the one TB is greater than or equal to Tmin, and the HARQ-ACK feedback is activated for the transmission, the terminal receiving the TB should feed back HARQ-ACK information, and the receiving terminals do not feed back the HARQ-ACK information for other TBs.

In the technical solutions of the embodiments of the disclosure, the terminal may use consecutive slots for transmission of different TBs. When performing the resource selection, the terminal may first select one SL grant, and then select another SL grant, where different SL grants occupy adjacent slots. Alternatively, the terminal may select R groups of consecutive slot resources composed of g adjacent slots as g SL grants. Alternatively, the terminal may preferentially select the resources within the slots adjacent to the existing SL grant. In addition, the terminal may use consecutive slots for transmission of the same TB, and the time of HARQ-ACK feedback may not be guaranteed or partially guaranteed when performing the resource selection. The methods proposed in the disclosure can ensure, as much as possible, that the terminal occupies consecutive resources in time and ensure the HARQ-ACK feedback, which is beneficial to improve the overall performance of the SL-U system.

Preferred embodiments of the present disclosure have been described in detail with reference to the accompanying drawings, but the present disclosure is not limited to the specific details of the above embodiments. Within the scope of the technical conception of the present disclosure, various simple modifications can be made to the technical solutions of the present disclosure, and these simple modifications all fall within the scope of protection of the present disclosure. For example, various specific technical features described in the above specific embodiments may be combined in any suitable manner without conflict. Various possible combinations are not further described in the present disclosure to avoid unnecessary repetition. For another example, various different implementations of the present disclosure can also be combined arbitrarily, which should also be considered as the contents disclosed by the present disclosure as long as they do not violate the conception of the present disclosure. For another example, various embodiments described in the present disclosure and/or the technical features in various embodiments can be arbitrarily combined with the related technologies without conflict, and the technical solution obtained after the combination should also fall within the scope of protection of the present disclosure.

It should also be understood that in the various method embodiments of the present disclosure, the size of the serial numbers of the above-mentioned various processes do not indicate a sequence of execution. The sequence of execution of the processes should be determined by their functions and inherent logics, and should not constitute a limitation on the implementation process of the embodiments of the present disclosure. Further, in embodiments of the present disclosure, the terms "downlink", "uplink" and "sidelink" are used to indicate transmission directions of signals or data. The term "downlink" is used to denote that the transmission direction of the signals or the data is a first direction from a station to user equipment in a cell. The term "uplink" is used to denote that the transmission direction of the signals or the data is a second direction from the user equipment in the cell to the station. The term "sidelink" is used to denote that the transmission direction of the signals or the data is a third direction from first user equipment to second user equipment. For example, "downlink signal" means that the transmission direction of the signal is the first direction. In addition, in the embodiments of the present disclosure, the term "and/or" refers to only an association relationship for describing associated objects and represents that three relationships may exist. Specifically, A and/or B may represent three cases: i.e., only A exists, both A and B exist, and only B exists. Furthermore, character "/" in the disclosure usually represents that previous and next associated objects form an "or" relationship.

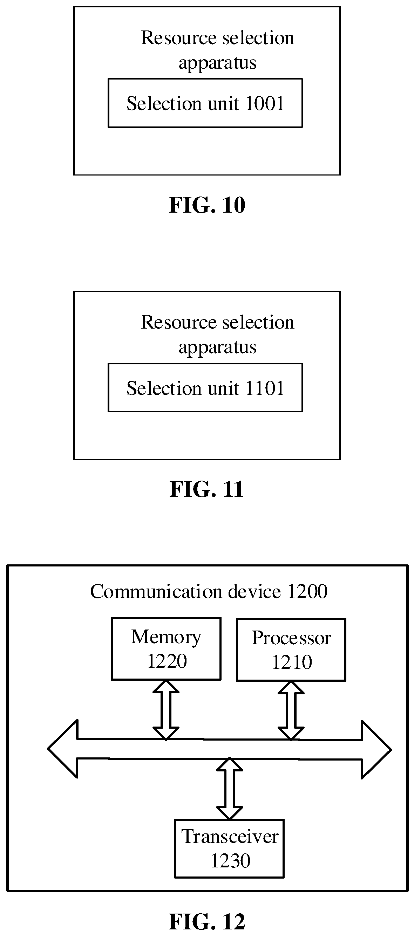

FIG. 10 is a first schematic structural diagram of a resource selection apparatus provided in an embodiment of the disclosure, which is applied to a terminal (such as the MAC layer of the terminal). As illustrated in FIG. 10, the resource selection apparatus includes a selection unit 1001.

The selection unit 1001 is configured to select multiple SL grants, where different SL grants among the multiple SL grants are used for transmission of different TBs, and the multiple SL grants have at least one of following characteristics: resources of the multiple SL grants correspond to multiple groups of consecutive slot resources, and different resources in the same group of consecutive slot resources belong to the different SL grants; or an interval between any two of resources in the same SL grant is greater than or equal to a first duration.

In some embodiments, the selection unit 1001 is configured to select multiple resource groups from a first resource set, where the first resource set is determined by a physical layer of the terminal and is reported to a MAC layer, and determine the multiple SL grants based on the multiple resource groups.

In some embodiments, the selection unit 1001 is configured to select one resource group from the first resource set; and when a number of selected resource groups is less than G, continue to select another resource group from the first resource set until the number of the selected resource groups is equal to G or no further resource group is able to be selected from remaining resources, where G is a positive integer.

In some embodiments, the selection unit 1001 is configured to select R resources satisfying a first condition from the first resource set, where the R resources form the one resource group, and R is a positive integer. The first condition includes at least one of: an interval between any two of the R resources is greater than or equal to the first duration; or a resource used for TB retransmission among the R resources is able to be indicated by a previously transmitted SCI.

In some embodiments, the selection unit 1001 is configured to select R resources satisfying a second condition from the first resource set, where the R resources form the another resource group, and R is a positive integer. The second condition includes at least one of: an interval between any two of the R resources is greater than or equal to the first duration; a resource used for TB retransmission among the R resources is able to be indicated by a previously transmitted SCI; or any one of the R resources and at least one of resources in the selected resource group are located in adjacent slots.

In some embodiments, the selection unit 1001 is configured to determine a first candidate resource set and a second candidate resource set from the first resource set; and select R resources satisfying a first condition from the first candidate resource set and/or the second candidate resource set, where the R resources form the another resource group, and R is a positive integer. The first condition includes at least one of: an interval between any two of the R resources is greater than or equal to the first duration; or a resource used for TB retransmission among the R resources is able to be indicated by a previously transmitted SCI.

In some embodiments, a characteristic of the first candidate resource set includes: any one of resources in the first candidate resource set and at least one of resources in the selected resource group are located in adjacent slots; and a characteristic of the second candidate resource set includes: the second candidate resource set contains at least part of resources, other than the first candidate resource set, in the first resource set.

In some embodiments, the selection unit 1001 is configured to select R' resources from the first candidate resource set; and select R-R' resources from the second candidate resource set when R'<R, where the selected R resources satisfy the first condition.

In some embodiments, the selection unit 1001 is configured to select the multiple groups of consecutive slot resources from a first resource set, where the first resource set is determined by a physical layer of the terminal and is reported to a MAC layer; divide the multiple groups of consecutive slot resources into multiple resource groups; and determine the multiple SL grants based on the multiple resource groups.

In some embodiments, the selection unit 1001 is configured to select R groups of consecutive slot resources from the first resource set, where the R groups of consecutive slot resources have at least one of the following characteristics: a number of resources contained in each of the R groups of consecutive slot resources is g, where g is a positive integer; g resources in the same group of consecutive slot resources are located in consecutive slots; or an interval between any two of the R groups of consecutive slot resources is greater than or equal to the first duration.

In some embodiments, the selection unit 1001 is configured to divide the R groups of consecutive slot resources into g resource groups, where different resources in the same resource group belong to different consecutive slot resources.

In some embodiments, G represents the maximum number of SL grants for the terminal, and g is less than or equal to G.

In some embodiments, R represents the maximum number of transmissions for one TB.

In some embodiments, the selection unit 1001 is configured to determine the multiple resource groups as the multiple SL grants, where each resource group corresponds to a respective SL grant. Alternatively, the selection unit 1001 is configured to determine repetitions of the multiple resource groups in multiple cycles as the multiple SL grants, where repetitions of each resource group in the multiple cycles correspond to a respective SL grant.

In some embodiments, the first duration is determined based on at least one of: a time interval between a physical sidelink shared channel (PSSCH) and a physical sidelink feedback channel (PSFCH) corresponding to the PSSCH; a duration required for the terminal to receive the PSFCH; a duration required for the terminal to process the PSFCH; a duration required for the terminal to prepare for SL retransmission; or a transmit-receive switching duration required by the terminal.

Those skilled in the art would appreciate that the relevant description of the above resource selection apparatus according to the embodiments of the present disclosure may be understood with reference to the relevant description of the resource selection method according to the embodiments of the present disclosure.

FIG. 11 is a second schematic structural diagram of a resource selection apparatus provided in an embodiment of the disclosure, which is applied to a terminal (such as the MAC layer of the terminal). As illustrated in FIG. 11, the resource selection apparatus includes a selection unit 1101.

The selection unit 1101 is configured to select one SL grant. Herein, the SL grant is used for transmission of one TB, the SL grant corresponds to a group of consecutive slot resources, and multiple resources in the consecutive slot resources belong to the SL grant.

In some embodiments, the selection unit 1101 is configured to select one resource group from a first resource set, where the first resource set is determined by a physical layer of the terminal and is reported to a MAC layer; and determine the one SL grant based on the one resource group.

In some embodiments, the selection unit 1101 is configured to select R resources satisfying a third condition from the first resource set, where the R resources form the one resource group, and R is a positive integer. The third condition includes at least one of: at least part of the R resources are located within consecutive slots; or a resource used for TB retransmission among the R resources is able to be indicated by a previously transmitted SCI.

In some embodiments, the selection unit 1101 is configured to select R' resources located within consecutive slots from the first resource set; and select R-R' resources from remaining resources of the first resource set when R' <R, where a resource used for TB retransmission among the selected R resources is able to be indicated by a previously transmitted SCI.

In some embodiments, for the TB transmitted using the SL grant, a receiving end of the TB does not feed back HARQ-ACK information. Alternatively, for the TB transmitted using the SL grant, a receiving end of the TB feeds back HARQ-ACK information on a PSFCH corresponding to the TB.

In some embodiments, the selection unit 1101 is configured to select R resources satisfying a fourth condition from the first resource set, where the R resources form the one resource group, and R is a positive integer. The fourth condition includes at least one of: at least part of the R resources are located within consecutive slots; an interval between any two resources in non-adjacent slots among the R resources is greater than or equal to a first duration; or a resource used for TB retransmission among the R resources is able to be indicated by a previously transmitted SCI.

In some embodiments, for the TB transmitted using the SL grant, when an interval between resources used for two transmissions of the TB is greater than or equal to the first duration, a receiving end of the TB feeds back HARQ-ACK information; when the interval between resources used for two transmissions of the TB is less than the first duration, the receiving end of the TB does not feed back the HARQ-ACK information.

In some embodiments, the first duration is determined based on at least one of: a time interval between a physical sidelink shared channel (PSSCH) and a physical sidelink feedback channel (PSFCH) corresponding to the PSSCH; a duration required for the terminal to receive the PSFCH; a duration required for the terminal to process the PSFCH; a duration required for the terminal to prepare for SL retransmission; or a transmit-receive switching duration required by the terminal.

In some embodiments, R represents the maximum number of transmissions for one TB.

In some embodiments, the selection unit 1101 is configured to determine the one resource group as the one SL grant. Alternatively, the selection unit 1101 is configured to determine repetitions of the one resource group in multiple cycles as the one SL grant.

Those skilled in the art would appreciate that the relevant description of the above resource selection apparatus according to the embodiments of the present disclosure may be understood with reference to the relevant description of the resource selection method according to the embodiments of the present disclosure.

FIG. 12 is a schematic structural diagram of a communication device provided in an embodiment of the disclosure. The communication device 1200 illustrated in FIG. 12 may include a processor 1210 configured to invoke and run a computer program from a memory to implement the methods in the embodiments of the disclosure.

Optionally, as illustrated in FIG. 12, the communication device 1200 may further include a memory 1220. The processor 1210 may invoke and run a computer program from the memory 1220 to implement the methods in the embodiments of the disclosure.

Herein, the memory 1220 may be a separate device independent of the processor 1210 or may be integrated in the processor 1210.

Optionally, as illustrated in FIG. 12, the communication device 1200 may further include a transceiver 1230, and the processor 1210 may control the transceiver 1230 to communicate with other devices. Specifically, the processor 1210 may control the transceiver 1230 to transmit information or data to other devices, or receive information or data from other devices.

Herein, the transceiver 1230 may include a transmitter and a receiver. The transceiver 1230 may further include antennas, and the number of the antennas is one or more.

The communication device 1200 may specifically be the terminal in the embodiments of the present disclosure, and the communication device 1200 may implement corresponding processes implemented by the terminal in various methods of the embodiments of the present disclosure, which are not elaborated here for the sake of brevity.

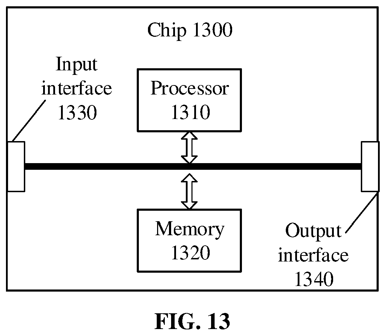

FIG. 13 is a schematic structural diagram of a chip according to an embodiment of the disclosure. The chip 1300 illustrated in FIG. 13 includes a processor 1310 configured to invoke and run a computer program from a memory to implement the methods in the embodiments of the present disclosure.

Optionally, as illustrated in FIG. 13, the chip 1300 may further include a memory 1320, and the processor 1310 may invoke and run a computer program from the memory 1320 to implement the methods in the embodiments of the present disclosure.

Herein, the memory 1320 may be a separate device independent of the processor 1310, or may be integrated in the processor 1310.

Optionally, the chip 1300 may further include an input interface 1330. The processor 1310 may control the input interface 1330 to communicate with other devices or chips. Specifically, the processor 1310 may acquire information or data transmitted by other devices or chips.

Optionally, the chip 1300 may further include an output interface 1340. The processor 1310 may control the output interface 1340 to communicate with other devices or chips. Specifically, the processor 1310 may output information or data to other devices or chips.

The chip may be applied to the terminal in the embodiments of the present disclosure, and the chip may implement corresponding processes implemented by the terminal in various methods of the embodiments of the present disclosure, which are not elaborated here for the sake of brevity.

It should be understood that the chip mentioned in the embodiments of the present disclosure may also be referred to as a system-level chip, a system chip, a chip system, or a system-on-chip chip, or the like.

It should be understood that the processor in the embodiments of the disclosure may be an integrated circuit chip having signal processing capability. In implementation, the various operations of the above method embodiments may be accomplished by integrated logic circuit of hardware or instructions in the form of software in a processor. The processor above may include: a general purpose processor, a digital signal processor (DSP), an application specific integrated circuit (ASIC), a field programmable gate array (FPGA), or other programmable logic devices, other discrete gate or transistor logic devices, other discrete hardware components. The methods, operations and logic block diagrams disclosed in embodiments of the present disclosure may be implemented or performed. The general purpose processor may be a microprocessor or the processor may be any conventional processor or the like. The operations of the methods disclosed in combination with the embodiments of the present disclosure can be directly embodied as execution of a hardware decoding processor or combined execution of hardware and software modules in the decoding processor. The software module may be located in a random-access memory (RAM), a flash memory, a read-only memory (ROM), a programmable ROM

(PROM) or an electrically erasable EPROM (EEPROM), a register and other storage medium mature in the art. The storage medium is located in the memory, and the processor reads information in the memory and completes the operations of the above methods in combination with its hardware.

It is understood that the memory in embodiments of the present disclosure may be volatile memory or non-volatile memory or may include both volatile and non-volatile memory. The non-volatile memory may be an ROM, a PROM, an erasable PROM (EPROM), an EEPROM, or a flash memory. The volatile memory may be an RAM which serves as an external cache. By way of illustration but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memory of the systems and methods described herein is intended to include but not be limited to these and any other suitable types of memories.

It should be understood that the memory described above is exemplary but not limiting. For example, the memory in embodiments of the present disclosure may also be a SRAM, a DRAM, a SDRAM, a DDR SDRAM, an ESDRAM, an SLDRAM, a DR RAM, or the like. That is, the memory in embodiments of the present disclosure is intended to include but not be limited to these and any other suitable types of memories.

An embodiment of the disclosure also provides a computer-readable storage medium for storing a computer program. The computer-readable storage medium may be applied to the terminal in the embodiments of the disclosure, and the computer program causes the computer to execute corresponding processes implemented by the terminal in various methods of the embodiments of the present disclosure, which are not elaborated here for the sake of brevity.

An embodiment of the disclosure also provides a computer program product including computer program instructions. The computer program product may be applied to the terminal in the embodiments of the disclosure, and the computer program instructions cause the computer to execute corresponding processes implemented by the terminal in various methods of the embodiments of the present disclosure, which are not elaborated here for the sake of brevity.

An embodiment of the disclosure also provides a computer program. The computer program may be applied to the terminal in the embodiments of the disclosure, and the computer program causes a computer to execute corresponding processes implemented by the terminal in various methods of the embodiments of the present disclosure when the computer program is run on the computer, which are not elaborated here for the sake of brevity.

Those of ordinary skill in the art would appreciate that the various exemplary units and algorithm operations described in connection with the embodiments in the present disclosure can be implemented in electronic hardware or a combination of computer software and electronic hardware. Whether these functions are performed in hardware or software depends on the specific application and design constraints of the technical solutions. Those of ordinary skill may use different methods for each particular application to implement the described functionality, but such implementation should not be considered outside the scope of the present disclosure.

Those skilled in the art would clearly appreciate that for the specific operating processes of the above-described systems, devices and units, the references may be made to the corresponding processes in the aforementioned method embodiments and would not be repeated herein, for convenience and brevity of description.

In several embodiments provided in the present disclosure, it should be understood that the disclosed systems, devices and methods may be implemented in other ways. For example, the above-described embodiments of the devices are only schematic, for example, the division of the unit is only a logical function division, and in practice, there may be another division method, for example, multiple units or components may be combined or integrated into another system, or some features may be ignored or not performed. Furthermore, the coupling or direct coupling or communication connection between each other illustrated or discussed may be indirect coupling or communication connection through some interfaces, devices or units, and may be electrical, mechanical or other forms.

The units illustrated as separate components may or may not be physically separated, and the components displayed as unit may or may not be physical units, that is, the units and the components may be located in one place, or may be distributed over multiple network units. Part or all of the units can be selected according to the actual needs to achieve the purpose of the embodiments.

In addition, various functional units in the embodiments of the present disclosure may be integrated in one processing unit, or various units may exist physically alone, or two or more units may be integrated in one unit.

The functions may be stored in a computer readable storage medium if implemented in the form of software functional units and sold or used as stand-alone products. In view of this understanding, the technical solutions of the present disclosure in essence, or the part that contributes to the related art, or the part of the technical solutions can be embodied in the form of a software product. The computer software product is stored in a storage medium and includes instructions that enable a computer device (which may be a personal computer, server, network device, or the like) to perform all or part of the operations of the methods described in various embodiments of the present disclosure. The aforementioned storage medium includes a USB flash disk, a removable hard disk, a ROM, a RAM, a magnetic disk or an optical disk and other medium capable of storing program codes.

The above-mentioned is only the specific implementation of the present disclosure, but the scope of protection of the present disclosure is not limited thereto. Any variation or substitution readily conceivable by those skilled in the art within the scope of the technology disclosed in the present disclosure shall be covered by the scope of protection of the present disclosure. Therefore, the scope of protection of the present disclosure should be subject to the scope of protection of the claims.

**Claims**

1. A resource selection method, comprising:

selecting, by a terminal, a plurality of sidelink (SL) grants, wherein different SL grants among the plurality of SL grants are used for transmission of different transport blocks (TBs), and the plurality of SL grants have at least one of following characteristics:

resources of the plurality of SL grants correspond to a plurality of groups of consecutive slot resources, and different resources in the same group of consecutive slot resources belong to the different SL grants; or
an interval between any two resources in the same SL grant is greater than or equal to a first duration.

2. The method of claim 1, wherein selecting, by the terminal, the plurality of SL grants comprises:

selecting, by the terminal, a plurality of resource groups from a first resource set, wherein the first resource set is determined by a physical layer of the terminal and is reported to a medium access control (MAC) layer; and determining, by the terminal, the plurality of SL grants based on the plurality of resource groups.

3. The method of claim 2, wherein selecting, by the terminal, the plurality of resource groups from the first resource set comprises:

selecting, by the terminal, one resource group from the first resource set; and
when a number of selected resource groups is less than G, continuing, by the terminal, to select one resource group from the first resource set until the number of the selected resource groups is equal to G or no resource group can be continued to be selected from remaining resources, wherein G is a positive integer.

4. The method of claim 3, wherein selecting, by the terminal, the one resource group from the first resource set comprises:
selecting, by the terminal, R resources satisfying a first condition from the first resource set, wherein the R resources form the one resource group, R is a positive integer, and the first condition comprises at least one of:

an interval between any two of the R resources is greater than or equal to the first duration; or
a resource used for TB retransmission among the R resources can be indicated by previously transmitted sidelink control information (SCI).

5. The method of claim 3 or 4, wherein continuing, by the terminal, to select the one resource group from the first resource set comprises:
selecting, by the terminal, R resources satisfying a second condition from the first resource set, wherein the R resources form the one resource group, R is a positive integer, and the second condition comprises at least one of:

an interval between any two of the R resources is greater than or equal to the first duration;
a resource used for TB retransmission among the R resources can be indicated by a previously transmitted SCI; or
any one of the R resources and at least one of resources in the selected resource group are located in adjacent slots.

6. The method of claim 3 or 4, wherein continuing, by the terminal, to select the one resource group from the first resource set comprises:

determining, by the terminal, a first candidate resource set and a second candidate resource set from the first resource set; and
selecting, by the terminal, R resources satisfying a first condition from the first candidate resource set and/or the second candidate resource set, wherein the R resources form the one resource group, R is a positive integer, and the first condition comprises at least one of:

an interval between any two of the R resources is greater than or equal to the first duration; or
a resource used for TB retransmission among the R resources can be indicated by a previously transmitted SCI.

7. The method of claim 6, wherein

the first candidate resource set has a following characteristic: any one of resources in the first candidate resource set and at least one of resources in the selected resource group are located in adjacent slots; and
the second candidate resource set has a following characteristic: the second candidate resource set comprises at least part of resources, other than the first candidate resource set, in the first resource set.

8. The method of claim 6 or 7, wherein selecting, by the terminal, the R resources satisfying the first condition from the first candidate resource set and/or the second candidate resource set comprises:

selecting, by the terminal, R' resources from the first candidate resource set; and
when R' <R, selecting, by the terminal, R-R' resources from the second candidate resource set, wherein the selected R resources satisfy the first condition.

9. The method of claim 1, wherein selecting, by the terminal, the plurality of SL grants comprises:

selecting, by the terminal, the plurality of groups of consecutive slot resources from a first resource set, wherein the first resource set is determined by a physical layer of the terminal and is reported to a MAC layer;
dividing, by the terminal, the plurality of groups of consecutive slot resources into a plurality of resource groups; and
determining, by the terminal, the plurality of SL grants based on the plurality of resource groups.

10. The method of claim 9, wherein selecting, by the terminal, the plurality of groups of consecutive slot resources from the first resource set comprises:
selecting, by the terminal, R groups of consecutive slot resources from the first resource set, wherein the R groups of consecutive slot resources have at least one of following characteristics:

a number of resources contained in each of the R groups of consecutive slot resources is g, wherein g is a positive integer;
g resources in the same group of consecutive slot resources are located in consecutive slots; or
an interval between any two of the R groups of consecutive slot resources is greater than or equal to the first duration.

11. The method of claim 10, wherein dividing, by the terminal, the plurality of groups of consecutive slot resources into the plurality of resource groups comprises:
dividing, by the terminal, the R groups of consecutive slot resources into g resource groups, wherein different resources in the same resource group belong to different consecutive slot resources.

12. The method of any one of claims 3 to 8 and 10 to 11, wherein G represents a maximum number of SL grants for the terminal, and g is less than or equal to G.

13. The method of any one of claims 4 to 8 and 10 to 11, wherein R represents a maximum number of transmissions for one TB.

14. The method of any one of claims 2 to 13, wherein determining, by the terminal, the plurality of SL grants based on the plurality of resource groups comprises:

determining, by the terminal, the plurality of resource groups as the plurality of SL grants, wherein each resource group corresponds to a respective SL grant; or
determining, by the terminal, repetitions of the plurality of resource groups in a plurality of cycles as the plurality of SL grants, wherein repetitions of each resource group in the plurality of cycles correspond to a respective SL grant.

15. The method of any one of claims 1 to 14, wherein the first duration is determined based on at least one of:

a time interval between a physical sidelink shared channel (PSSCH) and a physical sidelink feedback channel (PSFCH) corresponding to the PSSCH;
a duration required for the terminal to receive the PSFCH;
a duration required for the terminal to process the PSFCH;
a duration required for the terminal to prepare for SL retransmission; or
a transmit-receive switching duration required by the terminal.

16. A resource selection method, comprising:
selecting, by a terminal, one sidelink (SL) grant, wherein the SL grant is used for transmission of one transport block (TB), the SL grant corresponds to a group of consecutive slot resources, and a plurality of resources in the consecutive slot resources belong to the SL grant.

17. The method of claim 16, wherein selecting, by the terminal, the one SL grant comprises:

selecting, by the terminal, one resource group from a first resource set, wherein the first resource set is determined by a physical layer of the terminal and is reported to a medium access control (MAC) layer; and determining, by the terminal, the one SL grant based on the one resource group.

18. The method of claim 17, wherein selecting, by the terminal, the one resource group from the first resource set comprises:
selecting, by the terminal, R resources satisfying a third condition from the first resource set, wherein the R resources form the one resource group, R is a positive integer, and the third condition comprises at least one of:

at least part of the R resources are located within consecutive slots; or
a resource used for TB retransmission among the R resources can be indicated by previously transmitted sidelink control information (SCI).

19. The method of claim 18, wherein selecting, by the terminal, the R resources satisfying the third condition from the first resource set comprises:

selecting, by the terminal, R' resources located within the consecutive slots from the first resource set; and when R'<R, selecting, by the terminal, R-R' resources from remaining resources of the first resource set, wherein the resource used for TB retransmission among the selected R resources can be indicated by the previously transmitted SCI.

20. The method of claim 18 or 19, wherein

for the TB transmitted using the SL grant, a receiving end of the TB does not feed back hybrid automatic repeat request acknowledgement (HARQ-ACK) information; or
for the TB transmitted using the SL grant, a receiving end of the TB feeds back HARQ-ACK information on a physical sidelink feedback channel (PSFCH) corresponding to the TB.

21. The method of claim 17, wherein selecting, by the terminal, the one resource group from the first resource set comprises:
selecting, by the terminal, R resources satisfying a fourth condition from the first resource set, wherein the R resources form the one resource group, R is a positive integer, and the fourth condition comprises at least one of:

at least part of the R resources are located within consecutive slots;
an interval between any two resources in non-adjacent slots among the R resources is greater than or equal to a first duration; or
a resource used for TB retransmission among the R resources can be indicated by a previously transmitted SCI.

22. The method of claim 21, wherein for the TB transmitted using the SL grant,

when an interval between resources used for two transmissions of the TB is greater than or equal to the first duration, a receiving end of the TB feeds back HARQ-ACK information;
when the interval between resources used for two transmissions of the TB is less than the first duration, the receiving end of the TB does not feed back the HARQ-ACK information.

23. The method of claim 22, wherein the first duration is determined based on at least one of:

a time interval between a physical sidelink shared channel (PSSCH) and a PSFCH corresponding to the PSSCH;
a duration required for the terminal to receive the PSFCH;
a duration required for the terminal to process the PSFCH;
a duration required for the terminal to prepare for SL retransmission; or

a transmit-receive switching duration required by the terminal.

24. The method of any one of claims 18 to 23, wherein R represents a maximum number of transmissions for the one TB.

25. The method of any one of claims 17 to 24, wherein determining, by the terminal, the one SL grant based on the one resource group comprises:

determining, by the terminal, the one resource group as the one SL grant; or
determining, by the terminal, repetitions of the one resource group in a plurality of cycles as the one SL grant.

26. A resource selection apparatus, comprising:
a selection unit, configured to select a plurality of sidelink (SL) grants, wherein different SL grants among the plurality of SL grants are used for transmission of different transport blocks (TBs), and the plurality of SL grants have at least one of following characteristics:

resources of the plurality of SL grants correspond to a plurality of groups of consecutive slot resources, and different resources in the same group of consecutive slot resources belong to different SL grants; or
an interval between any two of resources in the same SL grant is greater than or equal to a first duration.

27. A resource selection apparatus, comprising:
a selection unit, configured to select one sidelink (SL) grant, wherein the SL grant is used for transmission of one transport block (TB), the SL grant corresponds to a group of consecutive slot resources, and a plurality of resources in the consecutive slot resources belong to the SL grant.

28. A terminal, comprising: a processor and a memory, wherein
the memory is configured to store a computer program, and the processor is configured to call the computer program stored in the memory and run the computer program to perform the method of any one of claims 1 to 15 or the method of any one of claims 16 to 25.

29. A chip, comprising a processor, configured to call a computer program from a memory and run the computer program, to cause a device on which the chip is installed to perform the method of any one of claims 1 to 15 or the method of any one of claims 16 to 25.

30. A computer-readable storage medium storing a computer program that causes a computer to perform the method of any one of claims 1 to 15 or the method of any one of claims 16 to 25.

31. A computer program product comprising computer program instructions that cause a computer to perform the method of any one of claims 1 to 15 or the method of any one of claims 16 to 25.

32. A computer program for causing a computer to perform the method of any one of claims 1 to 15 or the method of any one of claims 16 to 25.

FIG. 1-1

FIG. 1-2

FIG. 1-3

Excluded resources

$n$-$T_{proc,0}$

$E(v,m)$

n-T0    a    n    n+T1    n+T2    t
Non-monitored slot

Sensing window    Selection window

**FIG. 2**

UE1    Data    UE2

**FIG. 3-1**

Group

UE2

UE1    UE3

UE4

**FIG. 3-2**

**FIG. 3-3**

**FIG. 4**

PSSCH transmission resources

PSFCH
transmission
resources

|  | | | Sub-channel (3,1) | | PRB 15 |
|---|---|---|---|---|---|

Sub-channel #1

Sub-channel #0

Sub-channel (2,1)

Sub-channel (1,1)

Sub-channel (0,1)

Sub-channel (3,0)

Sub-channel (2,0)

Sub-channel (1,0)

Sub-channel (0,0)

PRB 15
PRB 14
PRB 13
PRB 12
PRB 11
PRB 10
PRB 9
PRB 8
PRB 7
PRB 6
PRB 5
PRB 4
PRB 3
PRB 2
PRB 1
PRB 0

Slot#0    Slot#1    Slot#2    Slot#3    Slot#4    Slot#5

## FIG. 5

A terminal selects multiple SL grants, herein, different SL grants among the multiple SL grants are used for transmission of different TBs, and the multiple SL grants have at least one of following characteristics: resources of the multiple SL grants correspond to multiple groups of consecutive slot resources, and different resources in the same group of consecutive slot resources belong to different SL grants; or, an interval between any two of resources in the same SL grant is greater than or equal to a first duration

601

## FIG. 6

A terminal selects one SL grant, herein, the SL grant is used for transmission of one TB, the SL grant corresponds to a group of consecutive slot resources, and multiple resources in the consecutive slot resources belong to the SL grant

701

## FIG. 7

FIG. 8

EP 4 615 086 A1

**FIG. 9**

Resource selection
apparatus

Selection unit 1001

**FIG. 10**

Resource selection
apparatus

Selection unit 1101

**FIG. 11**

Communication device 1200

Memory
1220

Processor
1210

Transceiver
1230

**FIG. 12**

**FIG. 13**

## INTERNATIONAL SEARCH REPORT

| International application No. |
| --- |
| **PCT/CN2022/129982** |

| A. | CLASSIFICATION OF SUBJECT MATTER |
| --- | --- |

H04W72/04(2023.01)i

According to International Patent Classification (IPC) or to both national classification and IPC

| B. | FIELDS SEARCHED |
| --- | --- |

Minimum documentation searched (classification system followed by classification symbols)

    IPC：H04W

Documentation searched other than minimum documentation to the extent that such documents are included in the fields searched

Electronic data base consulted during the international search (name of data base and, where practicable, search terms used)

    3GPP, CNTXT, DWPI, ENTXT, ENTXTC, VEN: SL, 侧链路, 侧行链路, 副链路, 授权, 许可, 传输块, 资源, 选择, 连续, 多时隙, 连续时隙, 间隔, 时长 sidelink, grant, licence, TB, transport block, resource?, select+, allocat+, consecutive, slot?, MCST, multiple consecutive slots transmission, gap, interval

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2021144750 A1 (HUAWEI TECHNOLOGIES CO., LTD.) 13 May 2021 (2021-05-13) description, paragraphs 7-8 | 1-32 |
| A | US 2022070936 A1 (QUALCOMM INC.) 03 March 2022 (2022-03-03) description, paragraphs 60 and 110-111 | 1-32 |
| A | CN 112261613 A (GOHIGH DATA NETWORKS TECHNOLOGY CO., LTD.) 22 January 2021 (2021-01-22) entire document | 1-32 |
| A | US 2022256539 A1 (QUALCOMM INC.) 11 August 2022 (2022-08-11) entire document | 1-32 |
| A | CN 107211430 A (LG ELECTRONICS INC.) 26 September 2017 (2017-09-26) entire document | 1-32 |
| A | CN 115245023 A (BEIJING XIAOMI MOBILE SOFTWARE CO., LTD.) 25 October 2022 (2022-10-25) entire document | 1-32 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 July 2023** | **25 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2022/129982**

| C. | DOCUMENTS CONSIDERED TO BE RELEVANT | |
|----|--------------------------------------|--|

| Category* | Citation of document, with indication, where appropriate, of the relevant passages | Relevant to claim No. |
|-----------|-------------------------------------------------------------------------------------|------------------------|
| A | LENOVO. "R2-2209936 Discussion on LBT impact to MAC for NR SL-U" *3GPP tsg_ran\wg2_rl2*, 30 September 2022 (2022-09-30), entire document | 1-32 |

Form PCT/ISA/210 (second sheet) (July 2022)

**INTERNATIONAL SEARCH REPORT**
Information on patent family members

International application No.

**PCT/CN2022/129982**

| Patent document cited in search report | | | Publication date (day/month/year) | Patent family member(s) | | | Publication date (day/month/year) |
|---|---|---|---|---|---|---|---|
| US | 2021144750 | A1 | 13 May 2021 | WO | 2021089042 | A1 | 14 May 2021 |
| US | 2022070936 | A1 | 03 March 2022 | WO | 2022047455 | A1 | 03 March 2022 |
| | | | | EP | 4205493 | A1 | 05 July 2023 |
| CN | 112261613 | A | 22 January 2021 | | None | | |
| US | 2022256539 | A1 | 11 August 2022 | | None | | |
| CN | 107211430 | A | 26 September 2017 | KR | 20170108987 | A | 27 September 2017 |
| | | | | WO | 2016117940 | A1 | 28 July 2016 |
| | | | | EP | 3248426 | A1 | 29 November 2017 |
| | | | | JP | 2018506902 | A | 08 March 2018 |
| | | | | US | 2016219620 | A1 | 28 July 2016 |
| | | | | US | 2019174534 | A1 | 06 June 2019 |
| | | | | US | 2020128580 | A1 | 23 April 2020 |
| CN | 115245023 | A | 25 October 2022 | | None | | |

Form PCT/ISA/210 (patent family annex) (July 2022)